(19) Europäisches Patentamt
European Patent Office
Office européen des brevets

(11) **EP 2 663 007 A1**

(12) **EUROPEAN PATENT APPLICATION**

(43) Date of publication:
**13.11.2013 Bulletin 2013/46**

(21) Application number: **12305510.5**

(22) Date of filing: **08.05.2012**

(51) Int Cl.:
***H04L 1/16*** *(2006.01)* ***H04L 1/00*** *(2006.01)*
***H04L 1/18*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventor: **Braun, Volker**
**70176 Stuttgart (DE)**

(74) Representative: **Kleinbub, Oliver et al**
**Alcatel-Lucent Deutschland AG**
**Intellectual Property & Standards**
**Lorenzstrasse 10**
**70435 Stuttgart (DE)**

# (54) A method for transmission of ACK/NACK messages, and a network device therefor

(57) The invention concerns a method for transmission of positive acknowledgement messages and negative acknowledgement messages from a first network device to a second network device for data packets received at the first network device, wherein each of said negative acknowledgement messages indicates one quality level of at least two different quality levels dependent on a quality of a data packet received at the first network device, and a differentiation between positive acknowledgement messages and negative acknowledgement messages has a stronger error protection than a differentiation between negative acknowledgement messages indicating different quality levels, and a network device therefor.

Im
N1
N2
N3
A
Re
a)
b)
c)
d)

Fig. 4

EP 2 663 007 A1

## Description

## Field of the invention

The invention relates to a method for transmission of positive acknowledgement messages and negative acknowledgement messages from a first network device to a second network device for data packets received at the first network device, and a network device adapted to perform said method.

## Background

HARQ (HARQ = Hybrid Automatic Repeat Request) with chase combining or incremental redundancy is widely used in modern packet based wireless communication systems such as HSPA systems (HSPA = High Speed Packet Access) or LTE systems (LTE = Long Term Evolution). HARQ is used in these systems in conjunction with adaptive modulation and coding so as to compensate for transmission errors caused by imperfect link adaptation. Imperfect link adaptation causes significant throughput degradation as compared to the theoretical limits, despite of using HARQ.

With HARQ, typically a CRC check (CRC = Cyclic Redundancy Check) is performed upon reception of a first transmission of an encoded data packet and the result of the CRC check, PASS or FAIL, is reported to the transmitter as an ACK (ACK = positive acknowledgement) or a NACK (NACK = negative acknowledgement), respectively. In case of NACK, the transmitter performs a retransmission of the data packet, and soft combining of the codewords of the received first transmission and the received retransmission is performed by the receiver before the decoding. Soft combining improves error rate performance as compared to simply discarding the first transmission attempt at the receiver.

With chase combining, the retransmission uses the same codeword size and same RV parameters (RV = redundancy version), i.e. puncturing patterns, as the first transmission. The retransmission of the whole codeword size of the first transmission may consume more radio link capacity than required.

With incremental redundancy only a subset of the information bits or none of the information bits of the first transmission and only parity bits are retransmitted. By using such kind of HARQ process the consumption of radio link capacity can be reduced but the transmitter of the retransmission usually does not know, which subset of information bits should be retransmitted for performing a complete error-free recovery of the data of the first transmission.

The way of performing a retransmission of data in a radio communication system effects the amount of radio resources required for signalling information, effects the amount of radio resources required for the retransmissions, effects the transmission delay for the data, and effects data handling at the transmitter and at the receiver.

According to a method for retransmitting data from a second network node of the radio communication system to a first network node of the radio communication system, a first data block is transmitted from the second network node to the first network node, the first data block comprising an information part, a second data block with redundancy information of data elements of the first data block is determined at the second network node by applying an information compression, e.g. obtained by puncturing or by an additional information combining step, to the data elements, and transmitting the second data block from the second network node to the first network node. The first and second network node may be a base station, a relay station or a user terminal.

The size of a retransmitted packet, i.e. the size of the second data block with redundancy information of data elements of the first data block can be compressed as compared to the size of the initial transmission, i.e. the size of the first data block comprising an information part. E.g. the size of the retransmitted packet could be half the size, or even less, of the initial transmission. In this way, a throughput gain of up to 33%, or even more, can be achieved when assuming a single retransmission for each packet, as e.g. 2 packets can be successfully transmitted in 3 time slots as compared to 2 packets in 4 time slots.

The compression rate for the retransmission can be adapted based on a quality of the received first data block, i.e. the receiver evaluates the quality of the received first data block, and based on the evaluated quality of the received first data block, a required redundancy for a successful decoding of the transmitted information is determined by the receiver. Said evaluated quality can e.g. be based on soft values as e.g. quality of soft bits derived in the receiver from the initial transmission. The higher the required redundancy for a successful decoding of the transmitted information is, the lower the compression rate is which is applied to the retransmission.

A method for a retransmission using HARQ techniques with the amount of redundancy transmitted in response to a first NACK message associated with a first attempt to decode a data block being variable is e.g. described in the US patent application publication US 2001/0056560 A1.

Information about the required redundancy for a successful decoding of the transmitted information can e.g. be explicitly comprised in a NACK message which is transmitted from the receiver to the transmitter. In an alternative, multi-level NACK messages can be transmitted from the receiver to the transmitter, each NACK level corresponding to a certain required redundancy for a successful decoding of the transmitted information. Thus, each NACK level triggers a retransmission with a certain compression rate.

A transmission scheme for conveying multi-level ACK/NACK information, e.g. a 4-level ACK/NACK, for use with HARQ for possible application in 3G/4G/5G wireless systems can be as follows:

- ACK: packet correctly received
- NACK1: packet incorrectly received with very low quality
- NACK2: packet incorrectly received with moderate quality
- NACK3: packet incorrectly received with almost good quality

Binary ACK or NACK can be derived in the receiver from CRC results PASS or FAIL of the received data, respectively. The differentiation among the different NACK levels can be derived in the receiver from soft information such as quality of soft bits of the received data.

**Summary**

The transmission of such multi-level ACK/NACK information shall be performed with a use of a low amount of radio resources.

The object of the invention is thus to propose a method for transmission of multi-level ACK/NACK information with a low amount of radio resources.

A straightforward solution for transmission of multi-level ACK/NACK information, e.g. by using 2 bits according to 4-level ACK/NACK information, would be to treat the inherent bits equally, i.e. for each bit an equal error protection such as coding and/or spreading, and an equal amount of radio resources is used, and the bits are mapped to a conventional multi-level modulation scheme, as e.g. 2 bits can be mapped to QPSK (QPSK = Quadrature Phase Shift Keying), or 2 bits can be mapped to BPSK BPSK = Binary Phase Shift Keying) on the I-axis and the Q-axis. To obtain better error rate performance the 2 bits can also be mapped separately to BPSK while allocating twice the amount of radio resources, e.g. the 18 available LTE ACK/NACK channel elements per PUCCH resource (PUCCH = Physical Uplink Control Channel Element) would allow to transmit nine 4-level ACK/NACKs.

Such a scheme would ignore that NACK level x to NACK level y error probabilities are allowed to be higher than NACK to ACK error probabilities, and may therefore lead either to suboptimum NACK to ACK error performance, or suboptimum use of radio resources. When designing a HARQ scheme, the NACK to ACK transmission error probability shall be very small, say <1%, to avoid that HARQ retransmissions get interrupted before conveying a packet successfully, as this would typically cause retransmissions on a higher protocol layer, as on RLC layer (RLC = Radio Link Control) or TCP layer (TCP = Transmission Control Protocol), and would thus cause more overhead and waste radio resources.

A basic idea of the invention is to split a set S of multi-level ACK/NACK messages or bits into at least two sets S1 and S2:

- the first set S1 differentiates between ACK and NACK,
- and the second set S2 differentiates between the different NACK levels.

The sets S1 and S2 may have equal number of elements, e.g. both S1 and S2 may have two elements, corresponding to 1 bit, in case of 4-level ACK/NACK, or set S2 may have more elements than S1, e.g. S1 may have 2 elements and S2 may have four elements, corresponding to 2 bits, resulting in 6-level ACK/NACK.

Furthermore, an unequal error protection is applied to these sets S1 and S2, i.e. the set S1 must have a stronger error protection than the set S2. This can be implemented in different ways by using different formatting for sets S1 and S2 w.r.t.:

- coding and/or code rate. The set S1 may use a code rate R1 and the set S2 may use a code R2>R1, e.g. the set S1 uses 8x repetition coding versus 4x repetition coding for the set S2; on LTE PUCCH this corresponds to mapping in the time domain, and/or
- spreading, e.g. different spreading factors or different sequence distances such as so-called Zadoff-Chu cyclic shifts. E.g. the set S1 may use a spreading sequence length 12 versus a spreading sequence length of 6 for the set S2, or the set S1 may use cyclic shift 2 versus cyclic shift 1 for the set S2; on LTE PUCCH this corresponds to mapping in frequency domain, and/or
- use of number of radio resources. E.g. a higher amount of time or frequency resources is used for the set S1 than for the set S1, and/or
- mapping to modulation symbols. E.g. a mapping of the set S1 may use BPSK and a mapping of the set S2 may use a modulation which is less robust than BPSK, such that the resulting modulation scheme when considering the set S may become asymmetric.

In an embodiment of the invention, a two stage detection algorithm can be applied in a network device for multi-level ACK/NACK reception:

- In the first stage, it is decided whether ACK or NACK was transmitted, e.g. with default NACK level 1, i.e. a decision is taken whether ACK or NACK level 1 was transmitted.
- In the second stage, the NACK levels are further differentiated based on soft information, as e.g. soft bits, in the processing on the Physical level (PHY level). If a reliable differentiation between the different NACK levels is possible then a decision among the NACK levels is done, otherwise the default NACK level is maintained.

Such an unequal treatment of the sets S1 and S2 may allow to convey a larger number of multi-level ACK/NACK messages for a given set of radio resources as compared to equal treatment, with at the same time fulfilling the required transmission failure rates, in particular the required very small NACK to ACK transmission error probability.

The object of the invention is thus achieved by a method for transmission of positive acknowledgement messages and negative acknowledgement messages from a first network device to a second network device for data packets received at the first network device, wherein

- each of said negative acknowledgement messages indicates one quality level of at least two different quality levels dependent on a quality of a data packet received at the first network device,
- and a differentiation between positive acknowledgement messages and negative acknowledgement messages has a stronger error protection than a differentiation between negative acknowledgement messages indicating different quality levels.

The object of the invention is furthermore achieved by a network device for mobile communication, wherein said network device is adapted to transmit positive acknowledgement messages and negative acknowledgement messages from said network device to a further network device for data packets received at the network device, with each of said negative acknowledgement messages indicating one quality level of at least two different quality levels dependent on a quality of a data packet received at the first network device, and with a differentiation between positive acknowledgement messages and negative acknowledgement messages having a stronger error protection than a differentiation between negative acknowledgement messages indicating different quality levels.

The invention is described in the following within the framework of 3GPP LTE, however as the invention is not restricted to 3GPP LTE or enhancements thereof, but can in principle be applied in other networks that use scheduling principles based on ACK/NACK processing, like e.g. in HSPA or WiMAX networks (WiMAX = Worldwide Interoperability for Microwave Access), in the following, instead of the term eNodeB used in LTE, the more general term base station is used.

Further developments of the invention can be gathered from the dependent claims and the following description.

Brief description of the figures

In the following the invention will be explained further making reference to the attached drawings.

Fig. 1 schematically shows a communication network in which the invention can be implemented.

Fig. 2 schematically shows the structure of a user terminal and a base station in which the invention can be implemented.

Fig. 3 schematically shows an example of a message flow for a downlink HARQ process using multi-level ACK/NACK according to an embodiment of the invention.

Fig. 4 schematically shows examples of asymmetric modulation schemes for multi-level ACK/NACK in a complex IQ-plane according to embodiments of the invention.

Fig. 5 schematically shows examples of asymmetric resource mapping for multi-level ACK/NACK in LTE PUCCH time slots according to embodiments of the invention.

Fig. 6 schematically shows an example of an unequal use of spreading sequence distances for multi-level ACK/NACK according to an embodiment of the invention.

**Description of the embodiments**

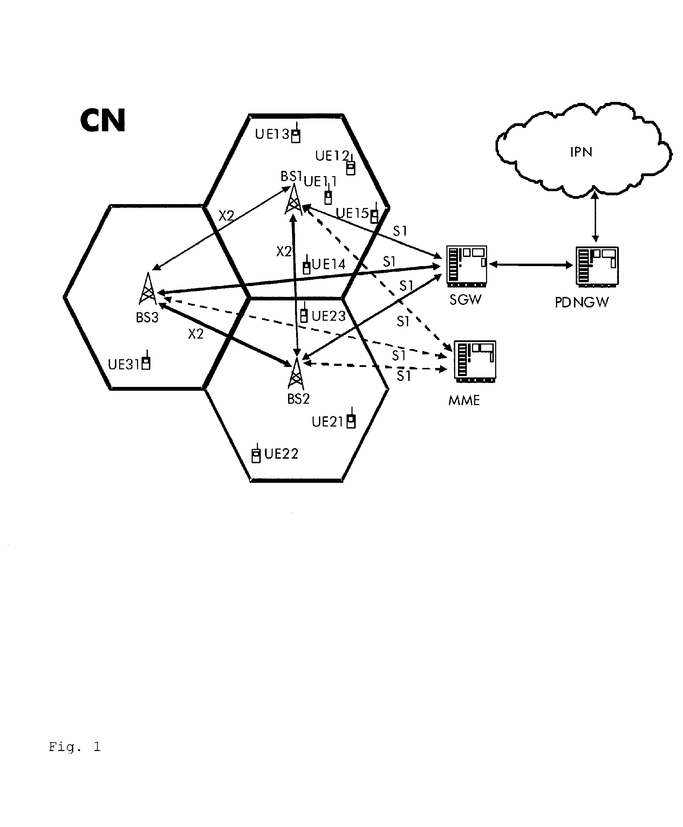

Fig. 1 shows as an example of a communication network in which the invention can be implemented a communication network CN according to the standard 3GPP LTE.

Said communication network CN comprises base stations BS1-BS3, user terminals UE11-UE31, a serving gateway SGW, a packet data network gateway PDNGW, and a mobility management entity MME.

The user terminals UE11-UE15 are connected via radio connections to the base station BS1, the user terminals UE21-UE23 are connected via radio connections to the base station BS2, and the user terminal UE31 is connected via a radio connection to the base station BS3. In future evolutions of LTE, each of the user terminals UE11-UE31 can also be connected via radio connections to multiple of said base stations BS1-BS3.

The base stations BS1-BS3 are in turn connected to the serving gateway SGW and to the mobility management entity MME, i.e. to the evolved packet core (EPC), via the so-called S1 interface.

The base stations BS1-BS3 are connected among each other via the so-called X2 interface.

The serving gateway SGW is connected to the packet data network gateway PDNGW, which is in turn connected to an external IP network IPN.

The S1 interface is a standardized interface between one of the base stations BS1-BS3, i.e. an eNodeB in this example, and the Evolved Packet Core (EPC). The S1 interface has two flavours, S1-MME for exchange of signalling messages between one of the base stations BS1-BS3 and the mobility management entity MME and S1-U for the transport of user datagrams between one of the base stations BS1-BS3 and the serving gateway SGW.

The X2 interface is added in 3GPP LTE standard primarily in order to transfer the user plane signal and the control plane signal during handover.

The serving gateway SGW performs routing of the IP user data between the base stations BS1-BS3, and the packet data network gateway PDNGW. Furthermore, the serving gateway SGW serves as a mobile anchor point during handover either between different base stations, or between different 3GPP access networks.

The packet data network gateway PDNGW represents the interface to the external IP network IPN and terminates the so-called EPS bearer (EPS = Evolved Packet System) which is established between a user terminal and the respective serving base station BS1-BS3.

The mobility management entity MME performs tasks of the subscriber management and the session management, and also performs the mobility management during handover between different access networks.

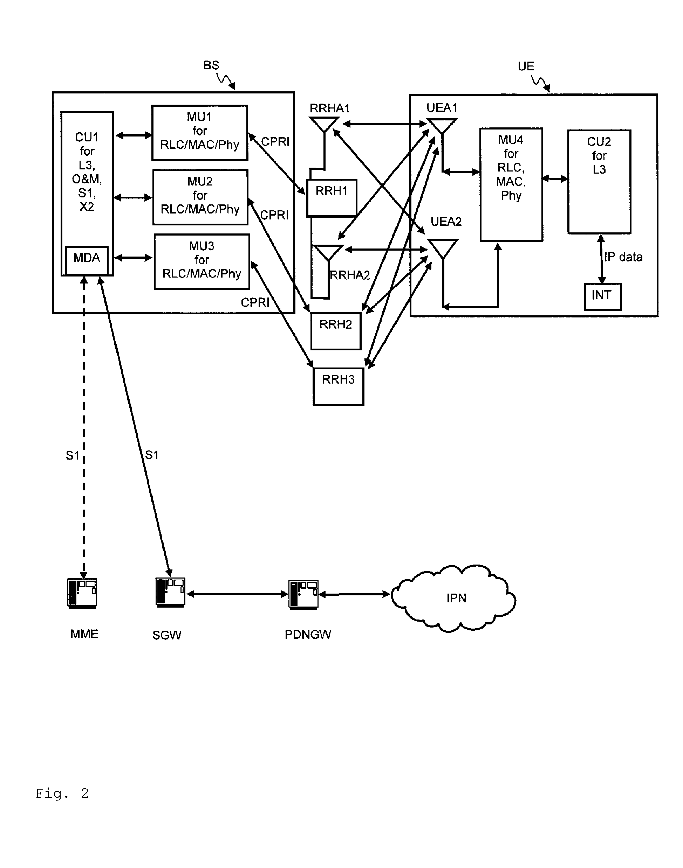

Fig. 2 schematically shows the structure of a user terminal UE and a base station BS in which the invention can be implemented.

The base station BS comprises by way of example three modem unit boards MU1-MU3 and a control unit board CU1, which in turn comprises a media dependent adapter MDA.

The three modem unit boards MU1-MU3 are connected to the control unit board CU1, and to a respective remote radio head RRH1, RRH2, or RRH3 via a so-called Common Public Radio Interface (CPRI).

Each of the remote radio heads RRH1, RRH2, and RRH3 is connected by way of example to two remote radio head antennas RRHA1 and RRHA2 for transmission and reception of data via a radio interface. Said two remote radio head antennas RRHA1 and RRHA2 are only depicted for the remote radio head RRH1 in fig. 2 for the sake of simplicity.

The media dependent adapter MDA is connected to the mobility management entity MME and to the serving gateway SGW and thus to the packet data network gateway PDNGW, which is in turn connected to the external IP network IPN.

The user terminal UE comprises by way of example two user terminal antennas UEA1 and UEA2, a modem unit board MU4, a control unit board CU2, and interfaces INT.

The two user terminal antennas UEA1 and UEA2 are connected to the modem unit board MU4. The modem unit board MU4 is connected to the control unit board CU2, which is in turn connected to interfaces INT.

The modem unit boards MU1-MU4 and the control unit boards CU1, CU2 may comprise by way of example Field Programmable Gate Arrays (FPGA), Digital Signal Processors (DSP), micro processors, switches and memories, like e.g. Double Data Rate Synchronous Dynamic Random Access Memories (DDR-SDRAM) in order to be enabled to perform the tasks described below.

The remote radio heads RRH1, RRH2, and RRH3 comprise the so-called radio equipment, e.g. modulators and amplifiers, like delta-sigma modulators (DSM) and switch mode amplifiers.

In downlink, IP data received from the external IP network IPN are transmitted from the packet data network gateway PDNGW via the serving gateway SGW to the media dependent adapter MDA of the base station BS on an EPS bearer. The media dependent adapter MDA allows for a connectivity to different media like e.g. fiber or electrical connection.

The control unit board CU1 performs tasks on layer 3, i.e. on the radio resource control (RRC) layer, such as measurements and cell reselection, handover and RRC security and integrity.

Furthermore, the control unit board CU1 performs tasks for Operation and Maintenance, and controls the S1 interfaces, the X2 interfaces, and the Common Public Radio Interface.

The control unit board CU1 sends the IP data received from the serving gateway SGW to a modem unit board MU1-MU3 for further processing.

The three modem unit boards MU1-MU3 perform data processing on layer 2, i.e. on the PDCP layer (PDCP = Packet Data Convergence Protocol) which is e.g. responsible for header compression and ciphering, on the RLC layer (RLC = Radio Link Control) which is e.g. responsible for segmentation and Automatic Repeat Request (ARQ), and on the MAC layer (MAC = Media Access Control) which is responsible for MAC multiplexing and Hybrid Automatic Repeat Request (HARQ).

Furthermore, the three modem unit boards MU1-MU3 perform data processing on the physical layer, i.e. coding, modulation, and antenna and resource-block mapping.

The coded and modulated data are mapped to antennas and resource blocks and are sent as transmission symbols from the modem unit board MU1-MU3 over the Common Public Radio Interface to the respective remote radio head RRH1, RRH2, or RRH3, and the respective remote radio head antenna RRHA1, RRHA2 for transmission over an air interface.

The Common Public Radio Interface (CPRI) allows the use of a distributed architecture where base stations BS, containing the so-called radio equipment control, are connected to remote radio heads RRH1, RRH2, and RRH3 preferably via lossless fibre links that carry the CPRI data. This architecture reduces costs for service providers because only the remote radio heads RRH1, RRH2, and RRH3 containing the so-called radio equipment, like e.g. amplifiers, need to be situated in environmentally challenging locations. The base stations BS can be centrally located in less challenging locations where footprint, climate, and availability of power are more easily managed.

The user terminal antennas UEA1, UEA2 receive the transmission symbols, and provide the received data to the modem unit board MU4.

The modem unit board MU4 performs data processing on the physical layer, i.e. antenna and resource-block demapping, demodulation and decoding.

Furthermore, the modem unit board MU4 performs data processing on layer 2, i.e. on the MAC layer (MAC = Media Access Control) which is responsible for Hybrid Automatic Repeat Request (HARQ) and for MAC demultiplexing, on the RLC layer (RLC = Radio Link Control) which is e.g. responsible for reassembly and Automatic Repeat Request (ARQ), and on the PDCP layer (PDCP = Packet Data Convergence Protocol) which is e.g. responsible for deciphering and header compression.

The processing on the modem unit board MU4 results in IP data which are sent to the control unit board CU2, which performs tasks on layer 3, i.e. on the radio resource control (RRC) layer, such as measurements and cell reselection, handover and RRC security and integrity.

The IP data are transmitted from the control unit board CU2 to respective interfaces INT for output and interaction with a user.

In the uplink, data transmission is performed in an analogue way in the reverse direction from the user terminal UE to the external IP network IPN.

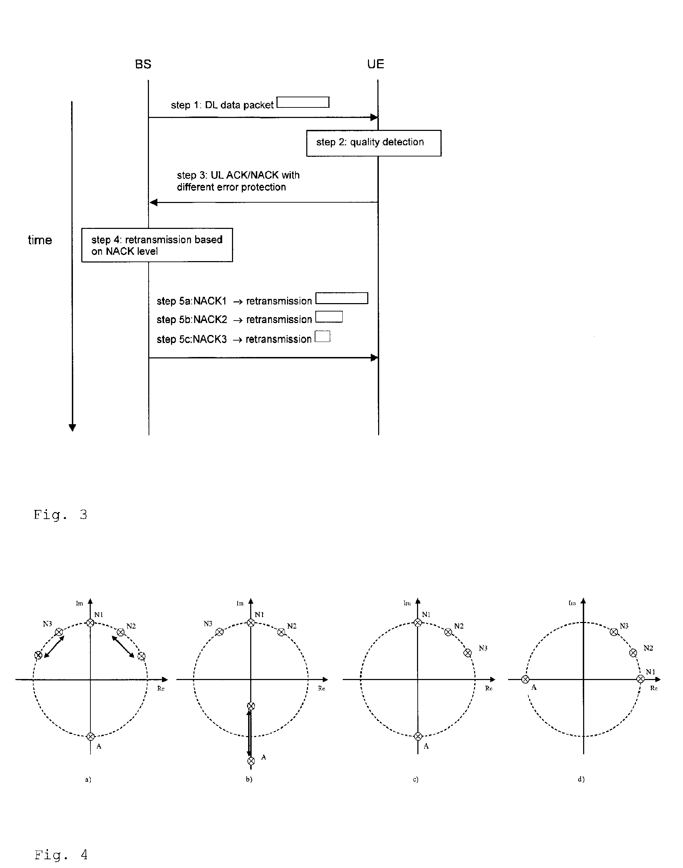

In the sequel, first in fig. 3 an example of a message flow for a downlink HARQ process using multi-level ACK/NACK with different error protection according to an embodiment of the invention is described, and then in figs. 4, 5 and 6 several embodiments of the invention for performing different error protection for multi-level ACK/NACK messages are disclosed.

Fig. 3 schematically shows an example of a message flow between a base station BS and a user terminal UE, as e.g. depicted in fig. 2 and described above, for a downlink HARQ process using multi-level ACK/NACK with different error protection according to an embodiment of the invention.

In step 1 of the method for a downlink HARQ process depicted in fig. 3, the base station BS transmits a downlink data packet e.g. in a Physical Downlink Shared Channel (PDSCH) to the user terminal UE.

In step 2, the quality of the received downlink data packet is evaluated in the user terminal UE. If the downlink data packet has been correctly decoded, then an ACK message will be sent to the base station BS in the next step 3. If the downlink data packet has not been correctly decoded, then a differentiation between the different NACK levels, 3 NACK levels NACK1, NACK2 and NACK3 in this embodiment, is derived in the user terminal UE based on soft information as e.g. the quality of so-called soft bits of the received downlink data packet.

Downlink data received in the user terminal UE are processed as soft bits. Soft bits are obtained after demodulation and prior to FEC decoding (FEC = Forward Error Correction), i.e. analogue so-called IQ values are typically converted into soft bits by a demodulator prior to FEC decoding. A soft bit s indicates e.g. the logarithmic likelihood ratio that a measured value y corresponds to a bit b=1 or b=0 according to the following formula:

$$s = \ln\left(\frac{P(y|b=1)}{P(y|b=0)}\right).$$

In this formula $P(y|b = 1)$ and $P(y|b = 0)$ indicate the probability that the measured value y corresponds to a bit b=1 or b=0. Thus, a high positive value for s indicates, that the measured value is very likely "1", and a high negative value for s indicates that the measured value is very likely "0". A value s=0 indicates that "1" and "0" have an equal probability.

E.g. based on the formula $s = \ln\left(\frac{P(y|b=1)}{P(y|b=0)}\right)$ for calculating soft bits s as given above, the absolute value of the soft bits can be determined as $|s| = \left|\ln\left(\frac{P(y|b=1)}{P(y|b=0)}\right)\right|$. The higher the absolute value of a soft bit s is, the higher the reliability and thus the quality of the soft bit s is.

Then, an average of the absolute values of the soft bits s of the downlink data packet is determined.

A first low range for the average of the absolute values of the soft bit s of the downlink data packet is defined to correspond to the NACK level NACK1 indicating a very low quality of the received downlink data packet.

A second middle range for the average of the absolute values of the soft bit s of the downlink data packet is defined to correspond to the NACK level NACK2 indicating a moderate quality of the received downlink data packet.

A third high range for the average of the absolute values of the soft bit s of the downlink data packet is defined to correspond to the NACK level NACK3 indicating an almost good quality of the received downlink data packet.

In step 3, the user terminal UE transmits an appropriate uplink multi-level ACK/NACK message dependent on the quality of the received downlink data packet evaluated in step 2 to the base station BS e.g. in a Physical Uplink Control Channel (PUCCH), or on Physical Uplink Shared Channel (PUSCH) together with data scheduled on PUSCH.

According to the embodiment of the invention, a differentiation between positive acknowledgement messages, i.e. ACK messages, and negative acknowledgement messages, i.e. multi-level NACK messages NACK1, NACK2 and NACK3, has a stronger error protection than a differentiation between the negative acknowledgement messages NACK1, NACK2 and NACK3 indicating different quality levels. Thus, the NACK to ACK transmission error probability will be lower than the NACKx to NACKy transmission error probability as required to avoid frequent retransmissions on higher protocol layers as described above.

In step 4, in case of a received NACK message, the base station BS decides on a compression rate for a retransmission of the downlink data packet based on the NACK level of the received multi-level NACK message, and thus based on the quality of the downlink data packet received in the user terminal UE, as each NACK level corresponds to a certain required redundancy for a successful decoding of the transmitted information. Thus, each NACK level triggers in the base station BS a retransmission with a certain compression rate. The required redundancy for each NACK level can e.g. be determined by simulations or measurements used to calibrate the respective appropriate compression rate.

In step 5a, in case of a received NACK level NACK1, the base station BS performs a retransmission of the downlink data packet with a low compression rate.

In step 5b, in case of a received NACK level NACK2, the base station BS performs a retransmission of the downlink data packet with a medium compression rate.

In step 5c, in case of a received NACK level NACK3, the base station BS performs a retransmission of the downlink data packet with a high compression rate.

One possibility to achieve a stronger error protection for the differentiation between positive acknowledgement messages and negative acknowledgement messages than for the differentiation between negative acknowledgement messages is to use an asymmetric mapping to modulation symbols in a complex IQ-plane. E.g. a mapping of ACK/NACK messages for a differentiation between ACK and NACK may use BPSK, and a mapping of different NACK messages for a differentiation between the different NACK levels may use a modulation which is less robust than BPSK, e.g. QPSK, such that the resulting modulation scheme when considering all ACK/NACK messages may become asymmetric.

Fig. 4 schematically shows 4 examples of such asymmetric modulation schemes with modulation symbols for four-level ACK/NACK in a complex IQ-plane according to embodiments of the invention.

In each of the 4 examples, the position of a positive acknowledgement A and of 3 negative acknowledgements N1-N3 with different NACK levels is depicted in the complex IQ-plane. All examples have in common, that the distance in the IQ-plane between ACK A and the NACKs N1-N3 is larger than the distance in the IQ-plane between the different NACKS N1-N3, so that the ACK/NACK differentiation has a stronger error protection than the differentiation between the different NACK levels N1-N3.

In the first modulation scheme depicted in a) the modulation scheme is asymmetric with respect to the Re axis with equal power for each modulation symbol A and N1-N3. The double arrows shall indicate a range of positions for NACKs N2 and N3 symmetric along the Im axis. Possible positions for the NACKs N2 and N3 may be e.g. at +/-60° or +/-45° versus the Re axis.

In the second modulation scheme depicted in b) the modulation scheme is asymmetric with respect to the Re axis with a possible power range for ACK A, which is indicated by a double arrow.

In the third modulation scheme depicted in c) the modulation scheme is asymmetric with respect to both the Re axis and the Im axis.

In the fourth modulation scheme depicted in d) the modulation scheme is asymmetric with respect to the Re axis and the Im axis, and mirrored as compared to the third modulation scheme depicted in c).

With each modulation symbol, a 4-level ACK/NACK can be conveyed, in contrast to BPSK conveying 2-level ACK/NACK while similar NACK to ACK error probability is obtained. Thus, the 18 available LTE ACK/NACK channel elements per PUCCH resource would allow to transmit 18 4-level ACK/NACKs.

When such an asymmetric modulation scheme is used in conjunction with spreading, in embodiments of the invention multiple modulation symbols may be superposed on the same time-frequency resources, possibly using 90 degree phase rotation similar as BPSK on I and Q as in LTE. In such a case, a superposition of modulation symbols drawn from the third modulation scheme depicted in c) and the fourth modulation scheme depicted in d) may be beneficial.

Apparently also modulation constellations for 3-level, 5-level, 6-level, ..., ACK/NACK can be designed, and the number of modulation symbols is not confined to a power of two. A major design criterion is that the minimum distance between ACK symbol and any NACK symbol shall be larger than the minimum distance between any two NACK symbols.

The exact position of the modulation symbols for NACKs N2 and N3 may be pre-defined or configurable, e.g. by configuring the angle versus the Re axis.

In an alternative embodiment of the invention using e.g. conventional modulation schemes as BPSK and QPSK, at least one of a first modulation scheme and a second modulation scheme having more modulation elements than the first modulation scheme, as e.g. BPSK and QPSK, is used for transmission of at least two bits belonging to different positive acknowledgement messages or negative acknowledgement messages in one modulation symbol. E.g. 1 bit for a differentiation between positive acknowledgement messages and negative acknowledgement messages is transmitted by BPSK, and 2 bits for a differentiation between negative acknowledgement messages are transmitted by QPSK in one modulation symbol. Said 2 bits for a differentiation between negative acknowledgement messages can comprise one bit of a first multi-level NACK differentiation, and one bit of a second multi-level NACK differentiation. Possible applications of said embodiment are spatial multiplexing with multiple streams per user terminal, or time division duplex (TDD) with multiple multi-level ACK/NACK messages of a user terminal per transmission time interval (TTI). In principle, also multiplexing of multi-level ACK/NACK messages from several user terminals is possible.

A further possibility to achieve a stronger error protection for the differentiation between positive acknowledgement messages and negative acknowledgement messages than for the differentiation between negative acknowledgement messages is to use a higher amount of time or frequency resources for the differentiation between positive acknowledgement messages and negative acknowledgement messages than for the differentiation between negative acknowledgement messages.

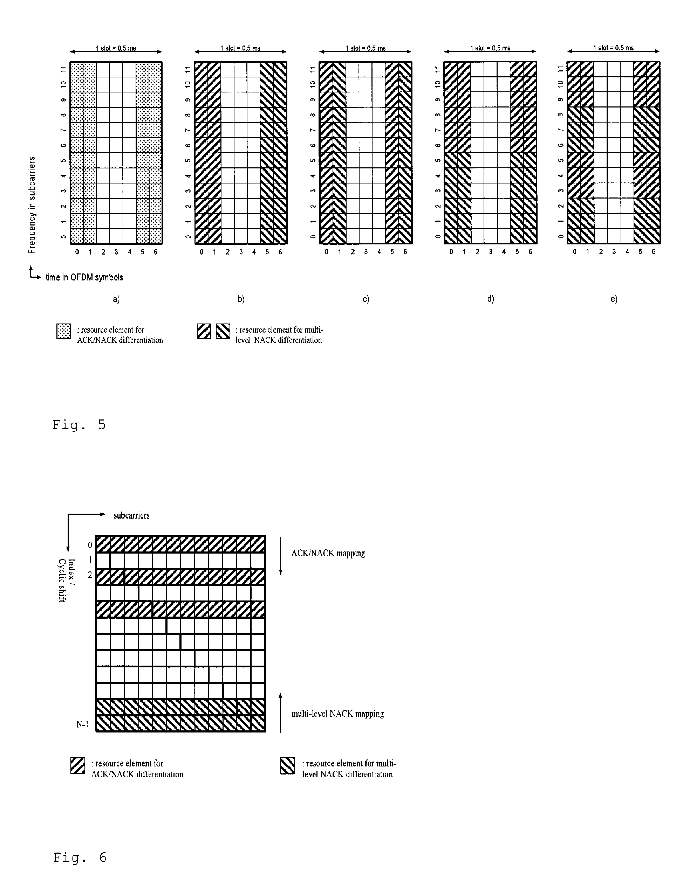

Fig. 5 schematically shows 5 examples of such asymmetric resource mapping for multi-level ACK/NACK in LTE PUCCH time slots according to embodiments of the invention.

The resource mapping is shown for 5 LTE PUCCH time slots a)-e) each with 12 subcarriers over 7 OFDM symbols, with frequency hopping at time slot boundaries not being shown. The respective mapping of ACK/NACK channel elements for conveying a differentiation between positive acknowledgement messages and negative acknowledgement messages is shown in a), and the respective mapping of multi-level NACK channel elements for conveying a differentiation between negative acknowledgement messages is shown in b)-e). Here it is assumed that one bit for a differentiation between positive acknowledgement messages and negative acknowledgement messages is transmitted with BPSK modulation and likewise one bit for a differentiation between negative acknowledgement messages is transmitted with BPSK modulation, resulting in a 4-level ACK/NACK. For the differentiation between negative acknowledgement messages, half the radio resources of the differentiation between positive acknowledgement messages and negative acknowledgement messages are occupied, thus the 18 available LTE ACK/NACK channel elements on PUCCH resource allow to transmit twelve 4-level ACK/NACKs. The differentiation between positive acknowledgement messages and negative acknowledgement messages, and the differentiation between negative acknowledgement messages may in principle be mapped to the same set of resources, or to different sets. When mapping to the same resource in LTE case, orthogonality between the spreading sequences needs to be considered, e.g. in case of 6-level ACK/NACK spreading factor 12 could be applied on the bit representing S1 and spreading factor 6 could be applied on the bit-pair representing S2, thus resulting in equal length spread sequences with good orthogonality, similar as with spreading in WCDMA.

In an alternative embodiment of the invention, at least two bits belonging to different multi-level ACK/NACK messages are spread on one PUCCH channel element. E.g. 1 bit for a differentiation between positive acknowledgement messages and negative acknowledgement messages is transmitted on a channel element for ACK/NACK differentiation, and 2 bits for a differentiation between negative acknowledgement messages are transmitted on a channel element for multi-level NACK differentiation. Said 2 bits for a differentiation between negative acknowledgement messages can comprise one bit of a first multi-level NACK differentiation, and one bit of a second multi-level NACK differentiation. Possible applications of said embodiment are spatial multiplexing with multiple streams per user terminal, or time division duplex (TDD) with multiple multi-level ACK/NACK messages of a user terminal per transmission time interval (TTI). In principle, also multiplexing of multi-level ACK/NACK messages from several user terminals is possible.

One ACK/NACK channel element as in LTE Re18 with 8x repetition over two time slots in time domain and 12x spreading in frequency domain can be used for the differentiation between positive acknowledgement messages and negative acknowledgement messages, i.e. ACK/NACK differentiation. One of said two time slots is shown exemplarily in a), with the OFDM symbols 0, 1, 5 and 6 being used for ACK/NACK differentiation.

Each of two half-size channel elements using 4x repetition over two time slots can be used for the differentiation between negative acknowledgement messages, as e.g. between NACK level NACK2 and NACK3. One of said two time slots is shown exemplarily in b), with the OFDM symbols 0 and 1 being used for the first half-size channel element, and with the OFDM symbols 5 and 6 being used for the second half-size channel element, as indicated by the different hachures in b). Alternatively, as exemplarily depicted in c), the OFDM symbols 0 and 5 are used for the first half-size channel element, and the OFDM symbols 1 and 6 are used for the second half-size channel element, as indicated by the different hachures in c).

In an alternative of the embodiment, each of two half-size channel elements using 6x spreading in frequency domain over two time slots can be used for the differentiation between negative acknowledgement messages. One of said two time slots is shown exemplarily in d), with the subcarriers 0-5 being used for the first half-size channel element, and with the subcarriers 6-11 being used for the second half-size channel element, as indicated by the different hachures in d). Alternatively, as exemplarily depicted in e), the subcarriers 0-2 and 6-8 are used for the first half-size channel element, and the subcarriers 3-5 and 9-11 are used for the second half-size channel element, as indicated by the different hachures in e).

Thus, according to the embodiments described in fig. 5, the amount of radio resources used for the differentiation between negative acknowledgement messages is only half the amount of radio resources used for the differentiation between positive acknowledgement messages and negative acknowledgement messages.

A yet further possibility to achieve a stronger error protection for the differentiation between positive acknowledgement messages and negative acknowledgement messages than for the differentiation between negative acknowledgement messages is to use spreading with different spreading sequence distances, e.g. so-called Zadoff-Chu quasi-orthogonal spreading with different cyclic shifts.

Fig. 6 schematically shows an example of such an unequal use of spreading sequence distances according to an embodiment of the invention.

In the embodiment depicted in fig. 6, it is assumed that spreading sequences with a length of 12 subcarriers are used for the differentiation between positive acknowledgement messages and negative acknowledgement messages, and for the differentiation between negative acknowledgement messages.

The resource mapping is shown for 3 ACK/NACK differentiations using so-called Zadoff-Chu spreading sequences with a cyclic shift index of 0, 2 and 4 respectively, and for 2 multi-level NACK differentiations using Zadoff-Chu spreading sequences with a cyclic shift index of 10 and 11 respectively.

The spreading sequences for both the ACK/NACK differentiations and the multi-level NACK differentiations are drawn from the same set of spreading sequences.

The ACK/NACK differentiations are mapped in increasing order, i.e. with an increasing spreading sequence index starting from zero, whereas the multi-level NACK differentiations are mapped in decreasing order, i.e. with a decreasing spreading sequence index starting from the largest index N-1, which is 11 in the example depicted in fig. 6.

Thus, as differentiations between positive acknowledgement messages and negative acknowledgement messages use a cyclic shift difference of 2 compared to differentiations between negative acknowledgement messages using a cyclic shift difference of 1, a stronger error protection for the differentiation between positive acknowledgement messages and negative acknowledgement messages than for the differentiation between negative acknowledgement messages is achieved.

An adaptation of a cyclic shift of spreading sequences can be mapped according to the embodiment depicted in fig. 5a) to the same set of resources. Alternatively, an adaptation of a cyclic shift of spreading sequences can also be combined with the embodiments depicted in figs. 5d) and 5e), e.g. using spreading sequences with a length of 6 subcarriers with cyclic shift 1 for the differentiation between negative acknowledgement messages as in figs. 5d) and 5e), and using spreading sequences with a length of 12 subcarriers with cyclic shift 2 for the differentiation between positive acknowledgement messages and negative acknowledgement messages as in fig. 5a).

The mapping of multi-level ACK/NACK messages to a subset of channel resources as depicted in figs. 5 and 6, e.g. a 4-level ACK/NACK with the differentiation between positive acknowledgement messages and negative acknowledgement messages being mapped as in fig. 5a) and the differentiations between negative acknowledgement messages being mapped as in figs. 5b)-5e) can e.g. be performed as follows:

- The mapping can be a straightforward extension of LTE Re18, e.g. assigning a pair of channel elements for ACK/NACK differentiation and for multi-level NACK differentiation, adjacent or from two disjoint resource pools, in increasing order with increasing PDCCH channel index.
- Alternatively the mapping can be realized in that ACK/NACK differentiation is mapped in increasing order with increasing PDCCH channel index preferably starting with bottom resource index 0, and multi-level NACK differentiation is mapped in decreasing order with increasing PDCCH channel index preferably starting with the highest available resource index. Such a mapping is exemplified in fig. 6.

The latter option may be more resource efficient when some users apply 2-level ACK/NACK and others multi-level ACK/NACK.

Concerning an allocation of demodulation pilots, the same demodulation pilots may be used for both ACK/NACK differentiation and multi-level NACK differentiation if ACK/NACK differentiation and multi-level NACK differentiation occupy the same set of radio resources. E.g. on LTE PUCCH the demodulation pilots can use the same Zadoff-Chu spreading sequence as the ACK/NACK differentiation.

Concerning the configuration of user equipment, a user terminal may be semi-statically configured to apply 2-level ACK/NACK or multi-level ACK/NACK, where the number of levels may be configurable or predefined by a respective standard. Also the mapping of a NACK level to a compression factor may be semi-statically configured in the sense that the user terminal reports NACK level NACK1, NACK2, NACK3 if e.g. a full-, half- or quarter-size retransmission is deemed sufficient for successful packet recovery.

A possible strategy by the network may be to use HARQ coding with reduced size of the retransmissions based on the NACK level in case of high traffic load in a cell, in order to benefit from enlarged cell throughput. In case of low to moderate traffic load, the network may preferably use conventional HARQ without compression so as to optimize error rate performance.

The signaling of the above mentioned semi-static information can be user-specific via radio resource control (RRC) layer, or can be multicast or broadcast via broadcast channel or system information for user groups within a geographical area, e.g. for a user group applying video streaming or having certain terminal capabilities.

## Claims

1. A method for transmission of positive acknowledgement messages (ACK) and negative acknowledgement messages (NACK) from a first network device (UE) to a second network device (BS) for data packets received at the first network device (UE), wherein

    • each of said negative acknowledgement messages (NACK) indicates one quality level of at least two different quality levels dependent on a quality of a data packet received at the first network device (UE),
    • and a differentiation between positive acknowledgement messages (ACK) and negative acknowledgement messages (NACK) has a stronger error protection than a differentiation between negative acknowledgement messages (NACK) indicating different quality levels.

2. A method according to claim 1, wherein

    • the second network device (BS) detects whether a positive acknowledgement message (ACK) or a negative acknowledgement message (NACK) has been transmitted from the first network device (UE),
    • in case a negative acknowledgement message (NACK) has been detected, a differentiation with respect to the quality level indicated by the negative acknowledgement message (NACK) is performed in the second network device (BS) if a reliability of a detected quality level indicated by the negative acknowledgement message (NACK) is above a threshold,
    • and in case a negative acknowledgement message (NACK) has been detected, a default quality level is used for the negative acknowledgement message (NACK) if said reliability of the detected quality level indicated by the negative acknowledgement message (NACK) is below said threshold.

3. A method according to claim 1 or 2, wherein dependent on the quality levels of the negative acknowledgement messages (NACK) retransmissions with different levels of compression are triggered in the second network device (BS).

4. A method according to any of the preceding claims, wherein an amount of radio resources used for the differentiation between positive acknowledgement messages (ACK) and negative acknowledgement messages (NACK) is higher than an amount of radio resources used for the differentiation between negative acknowledgement messages (NACK) indicating different quality levels.

5. A method according to any of the preceding claims, wherein a code rate used for the differentiation between positive acknowledgement messages (ACK) and negative acknowledgement messages (NACK) is lower than a code rate used for the differentiation between negative acknowledgement messages (NACK) indicating different quality levels.

6. A method according to any of the preceding claims, wherein a spreading factor used for the differentiation between positive acknowledgement messages (ACK) and negative acknowledgement messages (NACK) is higher than a spreading factor used for the differentiation between negative acknowledgement messages (NACK) indicating different quality levels.

7. A method according to claim 6, wherein at least two bits belonging to different positive acknowledgement messages (ACK) or negative acknowledgement messages (NACK) are spread on one channel element.

8. A method according to any of the preceding claims, wherein the differentiation between positive acknowledgement messages (ACK) and negative acknowledgement messages (NACK) and the differentiation between negative acknowledgement messages (NACK) indicating different quality levels use cyclic shifted signal sequences with the cyclic shifted signal sequences used for the differentiation between positive acknowledgement messages (ACK) and negative acknowledgement messages (NACK) having higher sequence distances than the cyclic shifted signal sequences used for the differentiation between negative acknowledgement messages (NACK) indicating different quality levels.

9. A method according to any of the preceding claims, wherein a modulation scheme used for the differentiation between positive acknowledgement messages (ACK) and negative acknowledgement messages (NACK) is more robust than a modulation scheme used for the differentiation between negative acknowledgement messages (NACK) indicating different quality levels.

**10.** A method according to claim 9, wherein at least one of the modulation scheme used for the differentiation between positive acknowledgement messages (ACK) and negative acknowledgement messages (NACK) and the modulation scheme used for the differentiation between negative acknowledgement messages (NACK) indicating different quality levels is used for transmission of at least two bits belonging to different positive acknowledgement messages (ACK) or negative acknowledgement messages (NACK) in one modulation symbol.

**11.** A method according to any of the preceding claims, wherein a modulation scheme is used for which the differentiation between positive acknowledgement messages (ACK) and negative acknowledgement messages (NACK) is more robust than the differentiation between negative acknowledgement messages (NACK) indicating different quality levels.

**12.** A method according to any of the preceding claims, wherein said first network device (UE) and said second network device (BS) is one of a group of a user terminal (UE), a base station (BS), and a relay node.

**13.** A network device (UE) for mobile communication, wherein said network device (UE) is adapted to transmit positive acknowledgement messages (ACK) and negative acknowledgement messages (NACK) from said network device (UE) to a further network device (BS) for data packets received at the network device (UE), with each of said negative acknowledgement messages (NACK) indicating one quality level of at least two different quality levels dependent on a quality of a data packet received at the first network device (UE), and with a differentiation between positive acknowledgement messages (ACK) and negative acknowledgement messages (NACK) having a stronger error protection than a differentiation between negative acknowledgement messages (NACK) indicating different quality levels.

**14.** A communication network for mobile communication comprising at least one network device (BS) according to claim 13.

CN
UE13
UE12
BS1
UE11
UE15
X2
S1
X2
UE14
S1
S1
SGW
PDNGW
IPN
UE23
S1
BS3
X2
UE31
S1
S1
BS2
MME
UE21
UE22

Fig. 1

BS
UE
CU1
for
L3,
O&M,
S1,
X2
MDA
MU1
for
RLC/MAC/Phy
MU2
for
RLC/MAC/Phy
MU3
for
RLC/MAC/Phy
CPRI
CPRI
CPRI
RRHA1
RRH1
RRHA2
RRH2
RRH3
UEA1
UEA2
MU4
for
RLC,
MAC,
Phy
CU2
for
L3
IP data
INT
S1
S1
MME
SGW
PDNGW
IPN

Fig. 2

BS
UE
step 1: DL data packet
step 2: quality detection
step 3: UL ACK/NACK with different error protection
time
step 4: retransmission based on NACK level
step 5a:NACK1 → retransmission
step 5b:NACK2 → retransmission
step 5c:NACK3 → retransmission

Fig. 3

Im
Re
N1
N2
N3
A
a)
b)
c)
d)

Fig. 4

1 slot = 0.5 ms
Frequency in subcarriers
time in OFDM symbols
0 1 2 3 4 5 6
0 1 2 3 4 5 6 7 8 9 10 11
a)
b)
c)
d)
e)
: resource element for ACK/NACK differentiation
: resource element for multi-level NACK differentiation

Fig. 5

subcarriers
Index / Cyclic shift
0
1
2
N-1
ACK/NACK mapping
multi-level NACK mapping
: resource element for ACK/NACK differentiation
: resource element for multi-level NACK differentiation

Fig. 6

Europäisches
Patentamt
European
Patent Office
Office européen
des brevets

# EUROPEAN SEARCH REPORT

Application Number
EP 12 30 5510

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/228320 A1 (LAROIA RAJIV [US] ET AL) 18 November 2004 (2004-11-18)<br>* abstract *<br>* figures 9,10,11b,12 *<br>* paragraphs [0060], [0097] - [0105], [0107], [0108] * | 1-4,6-14 | INV.<br>H04L1/16<br>H04L1/00<br>H04L1/18 |
| X | US 8 081 562 B2 (CHARPENTER FREDERIC [DE] ET AL CHARPENTIER FREDERIC [DE] ET AL)<br>20 December 2011 (2011-12-20)<br>* column 8, line 65 - column 9, line 67 *<br>* column 21, line 64 - column 22, line 16 * | 1-14 | |
| A | US 2008/232291 A1 (HUS OLIVIER J M [GB] ET AL HUS OLIVIER J-M [GB] ET AL)<br>25 September 2008 (2008-09-25)<br>* paragraph [0033] * | 1-14 | |
| A | US 2011/235626 A1 (YEON MYUNG-HOON [KR] ET AL) 29 September 2011 (2011-09-29)<br>* table 7 *<br>* paragraphs [0043], [0152] * | 1-14 | TECHNICAL FIELDS SEARCHED (IPC)<br>H04L |

The present search report has been drawn up for all claims

| Place of search | Date of completion of the search | Examiner |
|---|---|---|
| The Hague | 30 November 2012 | Borges, Pedro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

2
EPO FORM 1503 03.82 (P04C01)

## ANNEX TO THE EUROPEAN SEARCH REPORT ON EUROPEAN PATENT APPLICATION NO. EP 12 30 5510

This annex lists the patent family members relating to the patent documents cited in the above-mentioned European search report. The members are as contained in the European Patent Office EDP file on
The European Patent Office is in no way liable for these particulars which are merely given for the purpose of information.

30-11-2012

| Patent document cited in search report | Publication date | Patent family member(s) | Publication date |
|---|---|---|---|
| US 2004228320 A1 | 18-11-2004 | AU 2004214394 A1 | 02-09-2004 |
| | | BR PI0407348 A | 17-01-2006 |
| | | CA 2516492 A1 | 02-09-2004 |
| | | CN 1853380 A | 25-10-2006 |
| | | EP 1597649 A2 | 23-11-2005 |
| | | JP 4648302 B2 | 09-03-2011 |
| | | JP 2007525043 A | 30-08-2007 |
| | | JP 2011061810 A | 24-03-2011 |
| | | KR 20060008862 A | 27-01-2006 |
| | | RU 2353062 C2 | 20-04-2009 |
| | | SG 141419 A1 | 28-04-2008 |
| | | US 2004228320 A1 | 18-11-2004 |
| | | WO 2004075023 A2 | 02-09-2004 |
| US 8081562 B2 | 20-12-2011 | EP 1793520 A1 | 06-06-2007 |
| | | JP 4970462 B2 | 04-07-2012 |
| | | JP 2009517935 A | 30-04-2009 |
| | | US 2008310338 A1 | 18-12-2008 |
| | | WO 2007062754 A1 | 07-06-2007 |
| US 2008232291 A1 | 25-09-2008 | AT 437494 T | 15-08-2009 |
| | | US 2008232291 A1 | 25-09-2008 |
| US 2011235626 A1 | 29-09-2011 | KR 20110108807 A | 06-10-2011 |
| | | US 2011235626 A1 | 29-09-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20010056560 A1